Europäisches Patentamt

**European Patent Office**

**Office européen des brevets**

(19)

(11) Veröffentlichungsnummer : **0 017 134 B1**

# EUROPÄISCHE PATENTSCHRIFT

(12)

(45) Veröffentlichungstag der Patentschrift :
16.02.83

(21) Anmeldenummer : 80101561.1

(22) Anmeldetag : 25.03.80

(51) Int. Cl.³ : **G 11 B 23/04**, G 11 B 15/29, G 11 B 15/66

(54) **Bandkassette und Gerät dafür.**

(30) Priorität : **29.03.79 DE 2912423**

(43) Veröffentlichungstag der Anmeldung :
**15.10.80 Patentblatt 80/21**

(45) Bekanntmachung des Hinweises auf die Patenterteilung : **16.02.83 Patentblatt 83/07**

(84) Benannte Vertragsstaaten :
**AT BE CH DE FR GB IT LU NL SE**

(56) Entgegenhaltungen :
**FR A 1 038 639**
**GB A 1 224 737**
**US A 3 333 687**
**US A 3 334 831**
**US A 3 670 875**
**US A 3 807 651**
**US A 4 014 042**
**US A 4 023 748**

(73) Patentinhaber : **BASF Aktiengesellschaft**
**Carl-Bosch-Strasse 38**
**D-6700 Ludwigshafen (DE)**

(72) Erfinder : **Schoettle, Klaus**
**Ladenburger Strasse 70**
**D-6900 Heidelberg (DE)**
Erfinder : **Dobler, Peter**
**Wanderstrasse 61**
**D-6700 Ludwigshafen (DE)**
Erfinder : **Gliniorz, Lothar**
**Carl-Bosch-Ring 24**
**D-6710 Frankenthal (DE)**
Erfinder : **Hoffmann, Werner**
**Bannwasserstrasse 62**
**D-6700 Ludwigshafen (DE)**

Bandkassette und Gerät dafür

Die Erfindung betrifft eine Bandkassette, insbesondere Magnetbandkassette, bestehend aus einem Kassettengehäuse mit Boden und Deckel sowie Seitenwänden, Rück- und Frontwand, die mit dem Boden verbunden sind, und aus einer auf einem Rollenkern aufgewickelten Bandrolle und Halterungen mit einer Verriegelung für die Bandrolle, und ein Gerät dafür.

Mit der US-PS 4 014 042 ist eine solche Bandkassette für eine Magnetbandrolle bekannt, worin eine drehbare Hülle die Bandrolle teilweise umschließt und mittels der Hülle eine Seitenöffnung des Kassettengehäuses verschließbar/freigebbar ist.

Mit der DE-AS 23 64 397 ist auch bereits eine Bandkassette für eine Bandrolle bekannt, die aus zwei volumenmäßig etwa gleichgroßen, gelenkig miteinander verbundenen Teilen besteht, die zur Öffnung der Bandkassette auseinanderschwenkbar sind.

Beide bekannte Bandkassetten sind mit Halterungs- und Verriegelungseinrichtungen für die Bandrolle ausgebildet, die zur Freigabe der Bandrolle lösbar sind.

Beide bekannte Bandkassetten weisen auch Öffnungen auf zum Eintritt geräteseitiger Antriebsorgane, Löseeinrichtungen für die Verriegelungseinrichtungen und Betätigungseinrichtungen für die Freigabe bzw. Herstellung der Kassettenöffnung zum Austritt der Bandrolle. Nachteilig ist bei diesen bekannten Bandkassetten besonders ihre relativ aufwendige Herstellungsweise in mehreren, besonders auch in zueinander gelenkig bewegbaren Teilen, die für eine wirtschaftliche Serienfertigung nicht sehr geeignet sind.

Besagte Halterungs- und Verriegelungseinrichtungen wirken bei den bekannten Kassetten durch Angreifen am Umfang der Bandrolle selbst (DE-AS 23 64 397) oder durch Verklemmen des Rollenkerns zwischen den Kassettengehäuseteilen (US-PS 4 014 042). In diesen Fällen sind zusätzliche, getrennt herzustellende Einzelteile oder zwei relativ zueinander bewegbare Kassettenteile für das Erreichen einer Verriegelung der Bandrolle notwendig.

Mit der GB-PS 12 24 737 ist ein schachtelförmiger Behälter für eine Bandrolle bekannt, worin eine zentrale Kernaufnahme als Halterung für den Rollenkern dient und diesen mittels einer radialen Nase gegen Drehung verriegelt. Dieser Behälter besitzt einen üblichen, über Scharniereinrichtungen angelenkten Deckel und ist herstellungsmäßig ebenfalls aufwendig ausgebildet. Nach Öffnen des Deckels ist die Bandrolle axial nicht verriegelt. In Verbindung mit einem Gerät ist dieser Behälter nicht benutzbar. Zur Benutzung mit einem Gerät sind jedoch die eingangs beschriebenen Bandkassetten der US-PS 4 014 042 und der DE-AS 23 64 397 geeignet ausgebildet, obwohl zur Öffnung der Kassette eine relativ aufwendige Öffnungs-/Schließmechanik erforderlich ist.

Bei der US-PS 4 014 042 wird über eine Betätigungseinrichtung eine Relativbewegung zwischen einer Rollenkernaufnahme mit dem Rollenkern und der Magnetbandrolle sowie der Kassette ausgeführt, wobei der Rollenkern aus seiner Halterung in der Kassette gelöst wird und die Magnetbandrolle mit einer Antriebsrolle in Kontakt gebracht wird. Dies bekannte Gerät ist mit einem neuen Bandkassettentyp der vorliegenden Erfindung jedoch ohne weiteres nicht verwendbar.

Die Bandkassette der DE-AS 23 64 397 enthält eine zusätzliche Gehäuseverriegelungseinrichtung für die Kassettenhälften, die mittels einer geräteseitigen Löseeinrichtung zusammenwirkt, so daß eine Betätigungseinrichtung die Kassette öffnen kann und die Bandrolle freigibt.

Der Raumbedarf der letztgenannten, bekannten Kassette ist im geöffneten Zustand und damit im Betriebszustand gegenüber den Abmessungen und der Schließstellung merklich größer. Ferner ist als nachteilig anzusehen, daß die Kassette in ihrem Aufbau relativ kompliziert ist und aus vielen Einzelteilen zusammengesetzt werden muß. Eine wirtschaftliche Fertigung ist daher nicht gegeben. Geräteseitig ist eine aufwendige Mechanik erforderlich.

Der Erfindung liegt die Aufgabe zugrunde, in erster Linie eine neuartige Bandkassette zu entwickeln, die einfach ausgebildet und im Betrieb unkompliziert ist. Für den Platzbedarf der Kassette soll dabei der klein bemessene Raum eines kompakten Gerätes maßgebend sein. Ferner soll ein an die neuartige Bandkassette angepaßtes Gerät entwickelt werden.

Nach der vorliegenden Erfindung wird die Aufgabe dadurch gelöst, daß bei der Bandkassette der eingangs umrissenen Art die beiden Seitenwände und die Rückwand untereinander und mit dem Boden fest und die Frontwand mit dem Boden und den Seitenwänden lösbar verbunden sind und der Deckel mit Rück- und Frontwand gelenkig verbunden und derart gelenkig zweigeteilt ist, so daß der Deckel zusammen mit der Frontwand um die Boden-Kante der Rückwand gegen die Außenfläche des Boden klappbar ist, wobei die zur Anlage kommenden Flächen miteinander korrespondierende, lösbare Verbindungsmittel besitzen, und die Halterung der Magnetbandrolle im Kassettengehäuse eine auch nach Öffnen des Deckels axial auf den Rollenkern wirkende Verriegelung umfaßt.

Die erfindungsgemäße Kassette zeichnet sich besonders durch ihre Einfachheit aus ; ähnlich der Herstellung einer Faltschachtel aus einem Zuschnitt kann das Kassettengehäuse einschließlich sämtlicher Hilfsorgane aus einem einzigen Teil gebildet werden. Neben diesem herstellungstechnischen Vorteil fällt die kompakte und handliche Form der Kassette auf. In dieser ist die Bandrolle, ohne mit irgendwelchen Teilen in Berührung zu kommen, festgehalten.

Eine vorteilhafte Ausführungsform der Kassette besteht darin, daß die Gelenkstellen durch Filmscharniere gebildet sind, wodurch das Kassettengehäuse einteilig herstellbar wird.

Die Verbindungsmittel zwischen den im aufgeklappen Zustand der Kassette zur Anlage kommenden Flächen können aus seitlichen Stegen an der Fläche des Bodens bestehen, zwischen denen der Deckel einklemmbar ist, oder durch einen Haftbelag auf einer dieser Flächen oder durch an sich bekannte Verbindungen aus Warzen einerseits und Vertiefungen andererseits gebildet sein.

In sehr vorteilhafter Ausführung der Kassette ist die lösbare Verbindung zwischen der Frontwand einerseits und dem Boden und den Seitenwänden andererseits durch aus Vorsprüngen und Aussparungen bestehenden Klemmverbindungen gebildet. Die hierfür an der Frontwand vorgesehenen Vorsprünge können auch für die Verbindung zwischen den oben genannten zur Anlage kommenden Flächen benutzt werden.

In weiterer Ausgestaltung der Kassette ist die Halterung für die Bandrolle als ein am Kassettenboden im Halbkreis angeordneten Steg ausgebildet, der hinterschnitten ist und in den der mit einer der Hinterscheidung angepaßten Ringnut versehene Rollenkern mit der Bandrolle einschiebbar und darin dann gehalten ist. Die durch den Halbkreis gebildete Einschiebeöffnung kann durch elastisch nachgebende und Einführungsschrägen aufweisende Fortsätze an den Stegenden geringfügig verengt werden, so daß der Rollenkern in den Steg leichter einführbar und nach Überwinden der Engstelle verriegelt ist.

Eine vorteilhafte Weiterbildung der durch den Steg gebildeten Rollenkerhalterung besteht darin, daß vom Boden des Kassettengehäuses aus eine Blattfeder mit mindestens einem nockenartigen Vorsprung in den vom Steg umfaßten Halbkreisraum ragt, so daß der nockenartige Vorsprung an dem der Kassettenrückwand nahen Teil der inneren Umfangsfläche des in dem Kassettengehäuse befindlichen Rollenkerns angreift, um diesen im hinterschnittenen Steg festzuhalten.

Für gewisse Anwendungsfälle kann es von Vorteil sein, den Steg aus zwei gleichgroßen, gelenkig miteinander verbundenen, am Kassettenboden schwenkbar gelagerten und durch Federmittel in einer den Rollenkern verriegelnden Schließstellung haltbaren Teilen zu bilden. Geräteseitige Betätigungsmittel, die an Vorsprüngen der Teile angreifen, können diese zur Freigabe des Rollenkerns in eine Öffnungsstellung schwenken.

Gegenstand der Erfindung ist weiterhin ein Gerät für die erfindungsgemäße Bandkassette, in dem Aufnahmen für das Kassettengehäuse und den Rollenkern und Mittel zum Lösen der Halterungen und eine Betätigungseinrichtung vorgesehen sind, die Rollenkernaufnahme mit der darauf fixierten Bandrolle relativ zum Kassettengehäuse bewegbar ist und die Umfangsfläche der Bandrolle mit einem Antriebsorgan in Kontakt bringbar ist.

Das Gerät kann einen schwenkbar gelagerten Rahmen mit seitlichen Auflageflächen und Positionierelementen für die Kassette als Kassettenaufnahme besitzen und eine unter der Schwenkbewegung des Rahmens mit dem Rollenkern der Magnetbandrolle in Eingriff bringbare, drehbare Rollenkernaufnahme mit lösbaren Fixierungen für denselben enthalten, deren Träger zum Antriebsorgan hingewegbar gehalten ist.

Im Gerät kann der Träger der Rollenkernaufnahme zweckmäßig mit einer Betätigungseinrichtung verbunden sein, die die Bewegung des Trägers bewirkt und die durch Ineingriffkommen des Rollenkerns mit der Rollenkernaufnahme die Bandrolle zumindest teilweise von der Kassette trennt und gegen das Antriebsorgan drückt.

Die Betätigungseinrichtung besteht in einer vorteilhaften Ausführungsform des Geräts aus mindestens einem von einem Motor über an sich bekannte Übersetzungsmechanismen verschiebbaren Betätigungselement, das an dem bewegbaren unter Federlast stehenden Träger der Rollenkernaufnahme angreift.

In weiterer Ausgestaltung des Geräts kann ein Schwenkhebel vorgesehen sein, der für die Schwenkbewegung eine vorgegebene, auf dem Betätigungselement auflaufende Kontur aufweist und mindestens einen, an vorbestimmter Stelle in das Kassettengehäuse eingreifenden, Mitnehmerstift besitzt, wobei der Schwenkbereich des Schwenkhebels so groß bemessen ist, daß das Kassettengehäuse mittels des Mitnehmerstiftes teilweise unter eine an den eigeschwenkten Rahmen angrenzende und in der Ebene des Rahmens liegende Gehäusewand des Gerätes verschiebbar ist, wodurch der Rahmen über das Kassettengehäuse in der in das Gerät eingeschwenkten Stellung gehalten werden kann.

Zweckmäßig kann die Rollenkernaufnahme mit einem Schnappmechanismus für die lösbare Fixierung des mit entsprechenden Profilen versehenen Rollenkerns ausgestattet sein.

Wie vorstehend erläutert, sind auch die geräteseitigen Einrichtungen einfach ausgebildet. Insbesondere ist kein Öffnungs- und Schließmechanismus für die Kassette erforderlich, wobei die Kassettenaufnahme selbst — von einem eventuell vorzusehenden Einrastorgan abgesehen — keine bewegbaren Teile enthält. Im einfachsten Falle besteht die Betätigungsmechanik, mit deren Hilfe die Bandrolle in die Betriebsstellung gebracht wird, lediglich aus einem verschieblich angetriebenen Betätigungselement, das an der schwenkbaren Rollenkernaufnahme angreift.

Weitere Einzelheiten der Erfindung sind nachfolgend anhand eines in den Zeichnungen dargestellten Ausführungsbeispiels beschrieben.

Es zeigen

Figur 1 eine perspektivische Ansicht der Kassette im geöffneten Zustand,

Figur 1a eine perspektivische Ansicht eines Einsatzelementes für eine Schreibsperre,

Figur 2 die aufgeklappte Kassette im Querschnitt gemäß der Schnittlinie I-I in Figur 1,

Figur 3 eine Halte- und Verriegelungseinrichtung der Kassette für die Magnetbandrolle,

Figur 4 eine Schnittansicht der Halte- und Verriegelungseinrichtung gemäß der Schnittlinie I-I in Figur 1,

Figur 4a eine Verriegelung des Rollenkerns mit einer betätigbaren Blattfeder in einem vergrößerten Ausschnitt des Querschnitts gemäß der Schnittlinie I-I in Figur 1,

Figur 5 eine schwenkbare Verriegelungseinrichtung,

Figur 6 eine Aufnahmevorrichtung des Gerätes für die Kassette in perspektivischer und auseinander gezogener Darstellung.

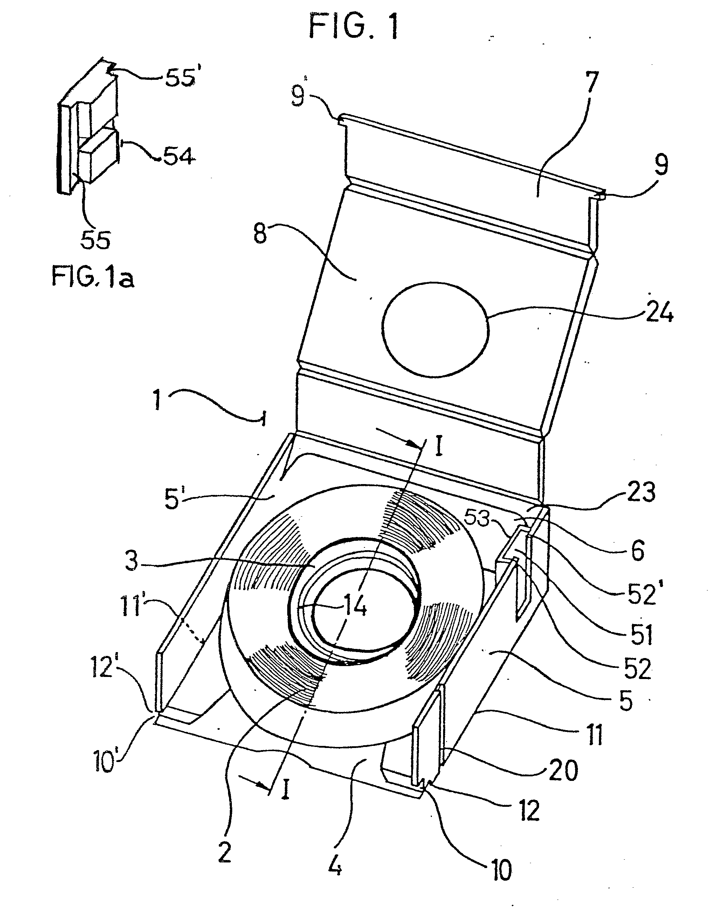

Figur 1 zeigt das geöffnete Kassettengehäuse 1 mit der Magnetbandrolle 2, die von einem Rollenkern 3 getragen ist.

Das Kassettengehäuse 1 besteht aus einem Boden 4, zwei einander gegenüberliegenden Seitenwänden 5, 5', einer Rückwand 6 und einer Frontwand 7 sowie aus einem den Innenraum des Gehäuses abschließenden Deckel 8. Die beiden Seitenwände und die Rückwand sind mit dem Boden und untereinander fest verbunden, während die Frontwand am Deckel gelenkig befestigt ist und in der Schließlage des Deckels mittels seitlicher Vorsprünge 9, 9' in entsprechende Aussparungen 10, 10' der frontseitigen Seitenwandränder, eine lösbare Verbindung bildend, eingerastet werden kann. Der Deckel 8 ist parallel zur scharnierartig ausgebildeten Gelenkstelle an der Rückwand im Abstand einer Rückwandhöhe gelenkig unterteilt. Durch diese konstruktiven Maßnahmen ist es möglich, den Deckel zusammen mit der Frontwand 7 nach deren Lösen von den Seitenwänden 5, 5' und dem Boden 4 nach hinten um die Rückwand 6 zu schlagen und an die Außenfläche des Bodens anzulegen. Auf diese Weise ist erreicht, daß die Kassette auch im für den Betrieb im Gerät geöffneten Zustand nicht mehr Platz beansprucht als das geringe Volumen der geschlossenen Kassette. Es ist zweckmäßig, die beiden dabei zur Anlage kommenden Flächen lösbar zu verbinden. Als Verbindungsmittel können z. B. Haftbeläge oder bekannte Klemmverbindungen, wie Warzen einerseits und Vertiefungen andererseits verwendet werden. Eine einfache Ausführung kann auch darin bestehen, daß die Seitenwände 5, 5' geringfügig über die Bodenfläche vorstehen, so daß Stege 11, 11' gebildet sind, zwischen denen der Deckel 8 einklemmbar ist. Besonders vorteilhaft hat sich erwiesen, die an der Frontwand 7 vorhandenen Vorsprünge 9, 9' für diese Verbindung mitzuverwenden, indem man am Ende der Stege eine Abstufung 12, 12' vorsieht, in die die Frontwand mit den Vorsprüngen eingehängt werden kann.

Die gelenkigen Verbindungen am Kassettengehäuse 1 sind vorzugsweise in Form von Filmscharnieren gebildet. Das Gesamte Kassettengehäuse ist dann in einem Teil herstellbar, beispielsweise durch Spritzgießen von Kunststoffen. Geeignete Fertigungsmethoden sind in der Technik für Kunststoffverarbeitung bekannt und daher nicht weiters beschrieben.

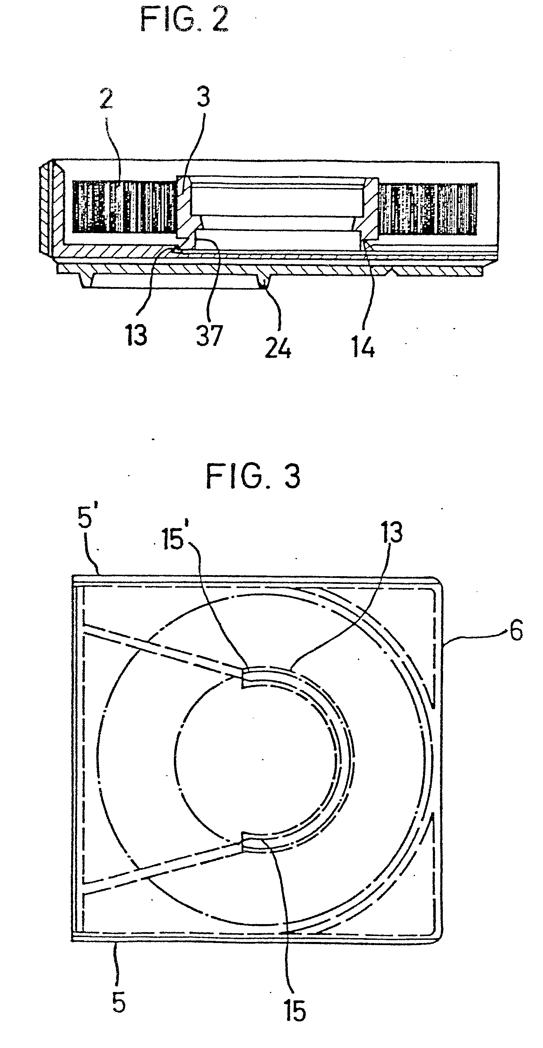

Zur Halterung und Verriegelung der Magnetbandrolle 2 im Kassettengehäuse 1 ist der Kassettenboden 4 auf der Innenseite mit einem zur Frontwand 7 hin offenen Halbkreissteg 13 versehen (Fig. 2 und 3), der in geringem Abstand über dem Boden vorzugsweise schwalbenschwanzförmig hinterschnitten ist. Selbstverständlich sind auch andere Hinterschneidungsformen verwendbar. Der Steg ist bei der Herstellung des Kassettengehäuses mit anformbar, kann aber auch nachträglich aus dem Boden herausgearbeitet werden. In die hinterschnittene Profililierung 16 des Steges 13 ist der Rollenkern 3 mittels einer der Hinterschneidung angepaßten Ringnut 14 zur Halterung im Kassettengehäuse einschiebbar.

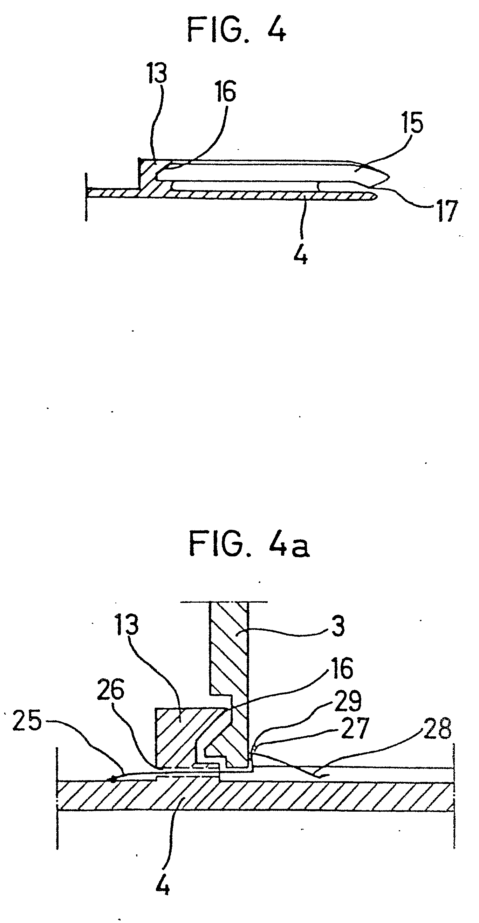

Der Steg 13 ist an beiden Enden durch zungenartig freistehende und federnd bewegbare Fortsätze 15, 15' verlängert, durch die die Öffnung zwischen den Stegenden verengt ist (Fig. 4). Beim Ein- und Ausschieben des Rollenkerns 3 in bzw. aus dem Stegprofil 16 wird diese Engstelle dadurch überwunden, daß die Fortsätze unter dem Andruck des Rollenkerns elastisch zurücktreten. Auf den eingeschobenen Rollenkern 3 üben die nach dem Einschieben wieder zurückfedernden Fortsätze 15, 15' eine Klemmwirkung aus, so daß der Rollenkern im Steg 13 lösbar verriegelt ist. Dabei wird die Ringnut 14 des Rollenkerns 3 mit einer Kraft in das Stegprofil 16 gedrückt, die eine ausreichende Reibung ergibt, um die Magnetbandrolle 2 im Kassettengehäuse 1 festzustellen.

Um das Einführen des Rollenkerns 3 in das Stegprofil 16 zu erleichtern, sind die Fortsätze 15, 15' zulaufend ausgebildet. Durch kuppenförmige Vorsprünge 17 an der Unterseite der Fortsätze 15, 15' kann die Verriegelung des Rollenkerns verstärkt werden.

Das Verriegeln des im hinterschnittenen Steg 13 gehaltenen Rollenkerns 3 kann in einer anderen Ausführungsform der Kassette (Fig. 4a) auch dadurch erreicht werden, daß am Boden 4 des Kassettengehäuses 1 zwischen Rückwand 6 und Steg eine Blattfeder 25 angebracht ist, die mit ihrem freien Ende in Höhe der parallel zu den Seitenwänden 5, 5' verlaufenden Mittellinie der Kassette durch eine Aussparung 26 im Steg vor das Stegprofil 16 tritt. An dieser Stelle ist die Feder 25 mit einem nockenartigen Vorsprung 27 versehen, der in Richtung des Einschiebens der Magnetbandrolle 2 in die Kassette eine Auflaufschräge 28 und eine sich daran anschließende, zum Kassettenboden zurücktretende Abstufung 29 aufweist. Die Anordnung und Bemessung der Feder 25 ist bezüglich des Vorsprungs 27 so gewählt, daß sie vom Rollenkern 3 beim Einschieben in das Stegprofil 16 verdrängt wird und in der Endlage des Rollenkerns wieder zurückfedert und dabei mit der Abstufung 29 an dessen innerer Umfangsfläche zum Verriegeln in dieser Lage eingreift. Das Entriegeln des Rollenkerns erfolgt mit Hilfe der geräteseitigen Rollenkernaufnahme, die beim Einsetzen der Kassette in das Gerät in den Rollenkern eintritt, dabei mit ihrer ringförmigen Stirnfläche am Vorsprung 27 der Feder 25 angreift und diese gegen den Boden zurückdrängt. Die Höhenlage der Feder in der entspannten Stellung kann durch die entsprechende Weite der Aussparung 26 im Steg bestimmt werden.

Selbstverständlich kann der Federhub für die Entriegelung des Rollenkerns auch durch geräteseitige Betätigungsorgane, beispielsweise durch Stifte vorgenommen werden, die beim Überführen der Kassette in die Betriebsstellung im Gerät zwischen Steg 13 und Rückwand 6 an der Feder angreifen.

Als Werkstoff für die Blattfeder kommen die üblichen Federmaterialien in Betracht. Auch Kunststoffe sind verwendbar. Herstellungstechnisch haben sie den Vorteil, daß die Feder beim Spritzgießen des Kassettengehäuses am Boden mit angeformt werden kann. Die Befestigung einer Feder aus Metall wird vorzugsweise durch Einschweißen in den Kunststoff des Bodens hergestellt. Selbstverständlich können auch andere Befestigungsarten, wie Nieten, Schrauben usw. angewendet werden.

Ebenso versteht es sich, daß die Feder durch entsprechende Umgestaltung auch innerhalb des durch den Steg 13 gebildeten Halbkreises angebracht werden kann. Die Aussparung 26 im Steg 13 kann dann entfallen.

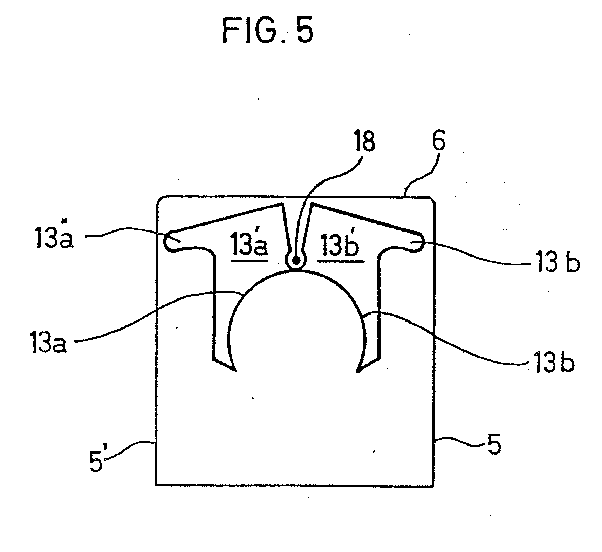

Für Anwendungsfälle der Kassette, in denen ein Ein- und Ausschieben des Rollenkerns mit der Magnetbandrolle in bzw. aus dem Kassettengehäuse im Gerät nicht oder nur bedingt möglich ist, worauf später noch näher eingegangen wird, kann in Abwandlung der vorstehend beschriebenen Konstruktion der Steg 13 aus zwei gleich großen Steghälften 13a, 13b gebildet werden, die an zwei gelenkig miteinander verbundenen Platten 13'a, 13'b angeformt bzw. aus diesen herausgearbeitet sind (Figur 5). Die beiden Platten weisen jeweils eine zu den Seitenwänden 5, 5' sich erstreckende Lasche 13"a, 13"b zum Angreifen eines Betätigungselementes auf und sind mittels eines gemeisamen, am Kassettenboden 4 befestigten Stiftes 18 im Kassettengehäuse 1 schwenkbar gehalten. Durch Auseinanderbewegen der beiden Platten wird der Rollenkern 3 mit der Magnetbandrolle 2 freigegeben. Eine in Form eines Federdraht- oder Blattfederstücks gebildete Feder, die in der Zeichnung nicht gezeigt ist, ist mit ihren beiden Enden in den Platten 13'a, 13'b so verankert, daß zwischen den Platten eine vorgespannte, freie Federverbindung entsteht, die die Steghälften 13a, 13b in die Ringut 14 des Rollenkerns zieht und damit diesen im Kassettengehäuse verriegelt.

Eine vorteilhafte Ausgestaltung der Platten besteht darin, daß beide Platten als einteiliges Kunststoffspritzgußteil hergestellt sind und die federnde Gelenkstelle durch einen dünnen Verbindungssteg gebildet ist.

Beim Einsetzen der Kassette in das dafür vorgesehene Gerät ist es zweckmäßig, diese in der Endlage einzurasten. Hierzu sind außen an den Seitenwänden 5, 5' Vertiefungen 20 vorgesehen, in die federbelastete Hebel des Geräts treten können. Derartige Einrast- bzw. Schnappmechanismen sind an sich bekannt und daher nicht weiters beschrieben. Der Hebel kann noch zusätzlich mit einem Schalter verbunden werden, um anzuzeigen, daß die Kassette einsetzbereit mit dem Gerät verbunden ist bzw. um weitere Bedienungsfunktionen freizugeben. Damit die Kassette nicht seitenverkehrt in das Gerät eingesetzt werden kann, sind die Vertiefungen 20 asymmetrisch angeordnet oder aber nur eine Vertiefung vorgesehen. Eine weiter Möglichkeit besteht in der Formgebung der Kassette, beispielsweise durch eine Rechteckform.

Eine sog. Schreibsperre, durch die ein versehentliches Löschen von Aufzeichnungen auf dem Magnetband infolge erneuter Aufzeichnung verhindert werden soll, ist am Kassettengehäuse 1 derart gebildet, daß eine der Seitenwände 5, 5' mit einer Einbuchtung 51 versehen ist, die Vorsprünge 52, 52' aufweist und deren U-förmig in den Kasetteninnenraum tretender Teil 53 gegenüber der Oberkante der Seitenwand in der Stärke des Deckels 8 zurückgesetzt ist. Das Betätigen der Schreibsperre wird mit Hilfe eines in Figur 1a schematisch dargestellten und in die Einbuchtung einschiebbaren Einsatzes 54 vorgenommen, der aus Kunststoff oder Metall bestehen kann. Er ist mit den Flächen 55, 55' an den Vorsprüngen geführt und mittels üblicher Klemmorgane, beispielsweise kuppen- oder warzenartige Vorsprünge, in der Einbuchtung 51 feststellbar.

Ein Abstützen des Deckels 8 auf dem Magnetbandwickel könnte zu Störungen durch Bandkantenbeschädigungen führen. Absätze 23 an der Innenseite der Rückwand 6 und der Seitenwände 5, 5' als Stützelemente für die beweglichen Teile des Kassettengehäuses schaffen Abhilfe. Ferner ist es vorteilhaft, den Deckel 8 innen mit einem kreisförmigen Profil 24 zu versehen, mit dem dieser im geschlossenen Zustand der Kassette am Rollenkern 3 anliegt.

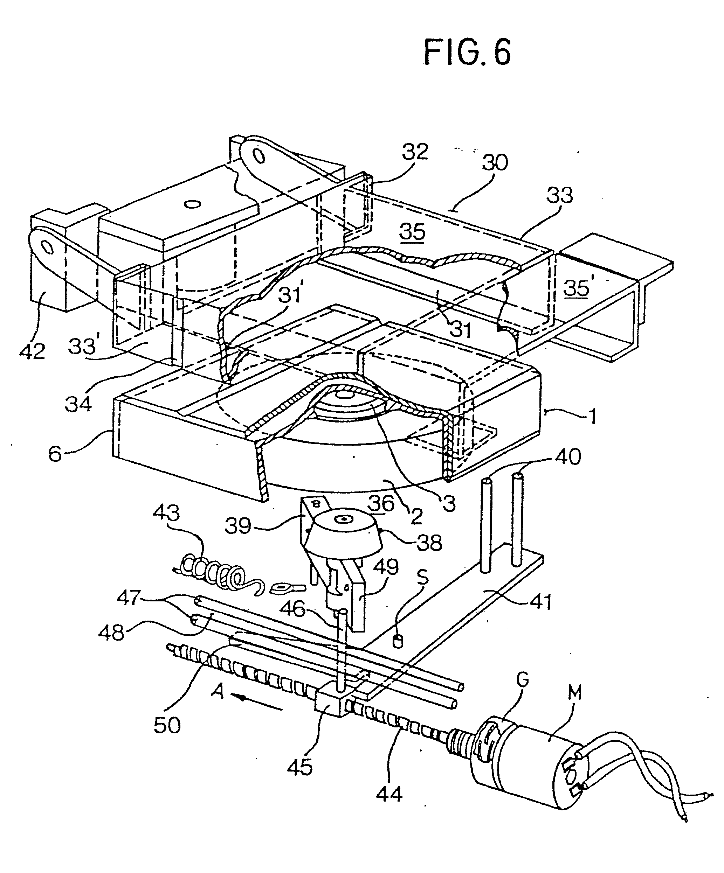

Fig. 6 zeigt für die vorstehend beschriebene Kassette eine Aufnahmeeinrichtung mit einem Lademechanismus eines nach dem Kontaktwickelprinzip arbeitenden Magnetbandgerätes. Die übrigen Funktionsteile des Gerätes sind bekannt und daher nachstehend nur insoweit beschrieben und in den Zeichnungen gezeigt, als sie mit der Aufnahmeeinrichtung zusammenwirken.

Ein schwenkbar gelagerter Rahmen 30 ist als Kassettenaufnahme seitlich mit nach innen vorspringenden Auflagestegen 31, 31' versehen. In diesen aus dem Gerät geschwenkten Rahmen wird die geöffnete Kassette 1 mit der offenen Kassettenfront voraus und mit der vom Deckel 8 freigegebenen Magnetbandrolle 2 zum Gerät weisend von Hand eingeschoben. Anschläge bzw. eine Anschlagleiste 32 am Ende der Auflagestege 31, 31' gewährleisten eine genaue Positionierung der Kassette. Für den Fall, daß die Kassette während des Betriebs in dieser Lage festgehalten werden muß, sind die Seitenteile 33, 33' des Rahmens 30 mit den bereits erwähnten Schnappmechanismen 34 versehen, die in die dafür vorgesehenen Vertiefungen 20 in den Seitenwänden 5, 5' der Kassette treten. Oberhalb des Raumes zur Aufnahme der Kassette ist der Rahmen 30 mit einer Platte 35 abgedeckt, die ein Teil des Gerätegehäuses 35' darstellt und im eingeschwenkten Zustand des Rahmens mit dem Gehäuse eine Ebene bildet.

Durch Einschwenken des Rahmens 30 in das Gerät wird der Rollenkern 3 für die Magnetbandrolle auf die Rollenkernaufnahme 36 gedrückt. Dabei rastet er mit einer weiteren Ringnut 37 an der inneren Umfangsfläche in den Druckkugelmechanismus 38 der Kernaufnahme ein. Für den Rahmen 30, der bezüglich der Schwenkbewegung unter Federlast steht, ist ein bei Kassettengeräten üblicher Rastklinkenmechanismus vorgesehen, der für die Entnahme der Kassette von Hand wieder auslösbar ist.

Die Rollenkernaufnahme 36 ist in einem zu einer Antriebsrolle bewegbaren Träger drehbar gelagert, der Teil eines an sich bekannten, beispielsweise in der US-Patentschrift 3 921 933 vorgeschlagenen Kontaktwickellaufwerks ist. Aus Gründen der leichteren Überschaubarkeit ist davon nur der als schwenkbarer Hebelarm 39 ausgeführte Träger dargestellt.

Unter dem Einschwenken der Kassette in das Gerät gelangt deren Rückwand 6 zwischen zwei Mitnehmerstifte 40 eines Schwenkhebels 41, der abgewinkelt und in einem Drehpunkt S vom Gerätechassis 42 gehalten ist. Unterhalb des Schwenkhebels ist eine von einem Motor M über ein Getriebe G antreibbare Gewindespindel 44 in Lagerböcken des Chassis gehalten, in deren Gewindegänge in bekannter Weise ein aufgesetzter Reiter 45 mittels zweier Keile eingreift. Der Reiter ist mit einem Bolzen 46 verbunden, der in einem zwischen zwei Schienen 47 gebildeten und parallel zur Gewindespindel 44 sicher erstreckenden Spalt 48 geführt ist. Der Bolzen ist zur Bildung eines Betätigungselementes zum Schwenkhebel 41 hin verlängert, so daß dieser einerseits an einer Verlängerung 49 des Hebelarms 39 angreift und andererseits entlang einer Kontur 50 des Schwenkhebels 41 verschiebbar ist, durch deren Form der Bewegungsablauf des Schwenkhebels bestimmt ist. Wird der Motor M aktiviert, bewegt die Gewindespindel 44 den Reiter mit dem Bolzen in Pfeilrichtung A, so daß sich der Hebelarm 39 mit der Rollenkernaufnahme 36 unter der Kraft einer Feder 43 zur Antriebsrolle bewegen kann. Gleichzeitig führt der Schwenkhebel 41 durch den entlang der Kontur 50 gleitenden Bolzen 46 eine Bewegung in entgegengesetzter Richtung aus und nimmt dabei über die Mitnehmerstifte 40 das Kassettengehäuse 1 mit. Danach ist die Magnetbandrolle 2 aus dem Steg 13 der Kassette völlig gelöst und an die Antriebsrolle angedrückt. Die Betriebslage der Magnetbandrolle ist damit erreicht. Durch die Aufteilung der für das Freisetzen der Magnetbandrolle bzw. des Rollenkerns 3 erforderlichen Verschiebung auf zwei entgegengesetzt verlaufende Teilbewegungen kann der Bewegungshub des Trägers der Rollenkernaufnahme klein bemessen werden.

Ein Teil des Kassettengehäuses 1 gelangt durch die Verschiebung unter die Gehäusewand 35', so daß dadurch der Rahmen 30 über die Kassette in der eingeschwenkten Stellung gehalten wird.

Auf eine Verschiebung des Kassettengehäuses und damit auf den Schwenkhebel 41 kann verzichtet werden, wenn bezüglich des Betriebsverhaltens des Kontaktwickellaufwerkes ein entsprechend größerer Bewegungshub des Hebelarms 39 in Kauf genommen werden kann. Ebenso kann der Schwenkhebel entfallen, wenn eine Kassette in der oben beschriebenen Ausführung mit einer internen Federvorrichtung gemäß Fig. 4a verwendet wird.

Die Forderung, daß der Bewegungshub des Hebelarms 39 auch bei feststehendem Kassettengehäuse möglichst klein sein soll, ist mit einer Kassette erfüllbar, die gemäß Figur 5 mit einer schwenkbaren Verriegelungseinrichtung ausgestaltet ist. Die geräteseitigen Maßnahmen hierfür sind in den Zeichnungen nicht dargestellt. Sie würden darin bestehen, daß der Schwenkhebel 41 anstelle mit den Mitnehmerstiften 40 in Höhe der Symmetrielinie der Kassette mit einer Schiene in deren Mittelpunkt gelenkig verbunden ist. Die beiden Enden der Schiene sind wiederum jeweils mit einem Mitnehmerstift versehen, der an der Lasche 13"a bzw. 13"b der schwenkbaren Verriegelungseinrichtung 13a, 13b ; 13'a, 13'b der Kassette angreifen kann.

Das Überführen der Kassette vom Betriebszustand in den Entladezustand zur Entnahme aus dem Gerät läuft in sinngemäß umgekehrter Weise wie oben zur Inbetriebstellung erläutert ab.

## Ansprüche

1. Bandkassette, insbesondere Magnetbandkassette, bestehend aus einem Kassettengehäuse (1) mit Boden (4) und Deckel (8), sowie Seitenwänden (5, 5'), Rück- und Frontwand (6 bzw. 7), die mit dem Boden (4) verbunden sind, und aus einer auf einem Rollenkern (3) aufgewickelten Bandrolle (2) und Halterungen mit einer Verriegelung für die Bandrolle (2), dadurch gekennzeichnet, daß die beiden Seitenwände (5, 5') und die Rückwand (6) untereinander und mit dem Boden (4) fest und die Frontwand (7) mit dem Boden (4) und den Seitenwänden (5, 5') lösbar verbunden sind und der Deckel (8) mit Rück- und Frontwand (6 bzw. 7) gelenkig verbunden und derart gelenkig zweigeteilt ist, so daß der Deckel (8) zusammen mit der Frontwand (7) um die Boden-Kante der Rückwand (6) klappbar ist, wobei die zur Anlage kommenden Flächen miteinander korrespondierende, lösbare Verbindungsmittel (11, 11' ; 9, 9' ; 12, 12') besitzen, und die Halterung der Bandrolle (2) im Kassettengehäuse (1) eine auch nach Öffnen des Deckels axial auf den Rollenkern (3) wirkende Verriegelung (13, 16) umfaßt.

2. Kassette nach Anspruch 1, dadurch gekennzeichnet, daß die Gelenkstellen durch Filmscharniere gebildet sind.

3. Kassette nach Anspruch 1 oder 2, dadurch gekennzeichnet, daß die Verbindungsmittel zwischen den im aufgeklappten Zustand der Kassette zur Anlage kommenden Flächen aus seitlichen Stegen (11, 11') an der Fläche des Bodens (4) bestehen, zwischen denen der Deckel (6) einklemmbar ist.

4. Kassette nach Anspruch 1 oder 2, dadurch gekennzeichnet, daß die Verbindungsmittel zwischen den zur Anlage kommenden Flächen aus einem auf mindestens einer dieser Flächen aufgebrachten Haftbelag bestehen.

5. Kassette nach Anspruch 1 oder 2, dadurch gekennzeichnet, daß die Verbindungsmittel zwischen den zur Anlage kommenden Flächen aus Klemmverbindungen bildenden Warzen einerseits und entsprechenden Vertiefungen andererseits bestehen.

6. Kassette nach einem der Ansprüche 1 bis 5, dadurch gekennzeichnet, daß beim Öffnen der Kassette lösbare Verbindungen zwischen der Frontwand (7) einerseits und dem Boden (4) und den Seitenwänden (5, 5') andererseits durch aus Vorsprüngen (9, 9') und Aussparungen (10, 10') bestehenden Klemmverbindungen gebildet sind.

7. Kassette nach Anspruch 6, dadurch gekennzeichnet, daß die für die lösbaren Verbindungen an der Frontwand (7) vorhandenen Vorsprünge (9, 9') sowohl für die Verbindungen zwischen Frontwand einerseits und Boden (4) und Seitenwänden (5, 5') andererseits als auch für die Verbindung der im geöffneten Zustand der Kassette (1) zur Anlage kommenden Flächen vorgesehen sind.

8. Kassette nach einem oder mehreren der Ansprüche 1 bis 7, gekennzeichnet durch durch eine Halterung für die Bandrolle (2), gebildet aus einem im Halbkreis im Kassettenboden (4) angeordneten Steg (13), der hinterschnitten ist und in den der mit einer der Hinterschneidung angepaßten Ringnut (14) versehene Rollenkern (3) mit der Bandrolle (2) einschiebbar und darin dann gehalten ist.

9. Kassette nach Anspruch 8, dadurch gekennzeichnet, daß der dem Durchmesser des Halbkreises entsprechende Abstand zwischen den Stegenden durch elastisch nachgebende und Einführschrägen aufweisende Fortsätze (15, 15') an den Stegenden geringfügig vermindert ist, so daß der Rollenkern in den Steg leichter einführbar und nach Überwindung der durch den verminderten Abstand gebildeten Engstelle verriegelt ist.

10. Kassette nach Anspruch 8, dadurch gekennzeichnet, daß vom Boden (4) des Kassettengehäuses (1) aus eine Blattfeder (25) mit mindestens einem nockenartigen Vorsprung (27) in den vom Steg (13) umfaßten Halbkreisraum ragt, so daß der nockenartige Vorsprung am der Kassettenrückwand (6) nahen Teil der inneren Umfangsfläche des in dem Kassettengehäuse befindlichen Rollenkerns (3) angreift, um diesen im hinterschnittenen Steg festzuhalten.

11. Kassette nach Anspruch 8, dadurch gekennzeichnet, daß der Steg (13) aus zwei gleichgroßen, gelenkig miteinander verbundenen Platten (13a, 13b) besteht, die am Kassettenboden (4) schwenkbar gelagert und durch Federmittel in einer den Rollenkern (3) verriegelnden Schließstellung haltbar sind.

12. Kassette nach einem oder mehreren der Ansprüche 1 bis 11, dadurch gekennzeichnet, daß der Deckel (8) der Kassette mittels kreisförmiger Profile (24) am Rollenkern (3) abstützbar ist.

13. Kassette nach einem der Ansprüche 1 bis 12, dadurch gekennzeichnet, daß zumindest eine der Seitenwände (5, 5') der Kassette mit einer Vertiefung (20) versehen ist, die zum Einrasten der Kassette in der geräteseitigen Kassettenaufnahme (30) mit einem Schnappmechanismus (34) derselben zusammenwirkt.

14. Gerät für die Kassette nach einem oder mehreren der Ansprüche 1 bis 13, dadurch gekennzeichnet, daß eine Aufnahme für das Kassettengehäuse (1) und den Rollenkern (3) und Mittel zum Lösen der Verriegelung und eine Betätigungseinrichtung (40 bis 50) vorgesehen ist, mittels der die Rollenkernaufnahme (36) mit der darauf fixierten Bandrolle (2) relativ zum Kassettengehäuse bewegbar ist und die Umfangsfläche der Bandrolle (2) mit einem Antriebsorgan in Kontakt bringbar ist.

15. Gerät nach Anspruch 14 dadurch gekennzeichnet, daß die Aufnahme einen schwenkbar gelagerten Rahmen (30) mit seitlichen Auflagestegen (31, 31') und Positionierelementen (32) für das Kassettengehäuse (1) umfaßt und daß eine unter der Schwenkbewegung des Rahmens mit dem Rollenkern (3) der Bandrolle (2) in Eingriff bringbare, drehbare Rollenkernaufnahme (36) vorgesehen ist, die auf einem Träger (39) zum Antriebsorgan hin bewegbar gehalten ist.

16. Gerät nach Anspruch 15, dadurch gekennzeichnet, daß der Träger (39) der Rollenkernaufnahme (36) mit einer Betätigungseinrichtung (40-50) verbunden ist, die die Bewegung des Trägers (39) bewirkt und die nach Ineingriffkommen des Rollenkerns (3) mit der Rollenkernaufnahme (36) die Bandrolle (2) zumindest teilweise von der Kassette trennt und gegen das Antriebsorgan drückt.

17. Gerät nach Anspruch 16, dadurch gekennzeichnet, daß die Betätigungseinrichtung aus mindestens einem von einem Motor (M) über Übersetzungsmechanismen (44, 45) verschiebbaren Betätigungselement (46) besteht, das an dem bewegbaren, unter Federlast stehenden Träger (39) der Rollenkernaufnahme (36) angreift.

18. Gerät nach Anspruch 17, dadurch gekennzeichnet, daß die Betätigungseinrichtung (40-50) einen Schwenkhebel (41) enthält, der für die Schwenkbewegung eine vorgegebene, auf dem Betätigungselement (46) auflaufende Kontur (50) aufweist und mindestens einen, an vorbestimmter Stelle in das Kassettengehäuse (1) eingreifenden, Mitnehmerstift (40) besitzt.

19. Gerät nach Anspruch 14 bis 18, dadurch gekennzeichnet, daß die Rollenkernaufnahme (36) aus einem Schnappmechanismus (38) für die lösbare Fixierung des mit entsprechenden Profilen (37) ausgestatteten Rollenkerns (3) besitzt.

20. Gerät nach Anspruch 14 bis 19, dadurch gekennzeichnet, daß der Schwenkbereich des Schwenkhebels (41) so groß bemessen ist, daß das Kassettengehäuse mittels des Mitnehmerstiftes (40) teilweise unter eine an den eingeschwenkten Rahmen (30) angrenzende und in der Ebene des Rahmens liegende Gehäusewand (35') des Gerätes verschiebbar ist, wodurch der Rahmen über das Kassettengehäuse in der in das Gerät eingeschwenkten Stellung gehalten werden kann.

**Claims**

1. A tape cartridge, especially a magnetic tape cartridge, consisting of a housing (1) with a bottom (4) and a lid (8) as well as side walls (5, 5') and a rear wall (6) and a front wall (7) which are connected to the bottom (4), and of a tape roll (2) wound on a hub (3), and holding means with locking means for the tape roll (2), wherein the two side walls (5, 5') and the rear wall (6) are rigidly attached to one another and to the bottom (5), whilst the front wall (7) is detachably connected to the bottom (4) and the side walls (5, 5'), and the lid (8) is hingedly connected to the rear wall (6) and front wall (7) and is so subdivided by a hinge that the lid (8), together with the front wall (7), can be folded about the bottom edge of the rear wall (5), the surfaces coming into contact possessing mutually corresponding releasable connecting means (11, 11'; 9, 9'; 12, 12'), and the means for holding the tape roll (2) in the cartride housing (1) including locking means (13, 16) which, after the lid has been opened, act axially on the hub (3).

2. A cartridge as claimed in claim 1, wherein the hinges are integral hinges.

3. A cartridge as claimed in claim 1 or 2, wherein the means of connecting the surface which come into contact when the lid has been folded back consist of lateral projections (11, 11') on the surface of the bottom (4), between which projections the lid (8) can be clamped.

4. A cartridge as claimed in claim 1 or 2, wherein the means of connecting the surfaces which come into contact consist of an adhesive coating applied to at least one of these surfaces.

5. A cartridge as claimed in claim 1 or 2, wherein the means of connecting the surfaces which come into contact consist of snap-fit connections comprising studs on the one hand and corresponding recesses on the other.

6. A cartridge as claimed in any of claims 1 to 5, wherein, when the cassette is opened, the releasable connections between the front wall (7), on the one hand, and the bottom (4) and the side walls (5, 5'), on the other hand, are in the form of snap-fit connections consisting of projections (9, 9'), and recesses (10, 10').

7. A cartridge as claimed in claim 6, wherein the projections (9, 9') on the front wall (7), forming part of the releasable connections, are intended both to connect the front wall, on the one hand, to the bottom (4) and side walls (5, 5'), on the other, and to connect the surfaces which come into contact when the cartridge (1) is in the opened state.

8. A cartridge as claimed in one or more of claims 1 to 7, wherein there is provided a holding means for the tape roll (2), which is in the form of a semi-circular web located on the cartridge bottom (4), which web is undercut and into which the hub (3) that has an annular groove (14) matching the undercut and carries the tape roll (2) can be pushed and then held therein.

9. A cartridge as claimed in claim 8, wherein the distance between the ends of the web, corresponding to the diameter of the semi-circular web, is slightly reduced by springly divergent extensions (15, 15') located at the web ends, so that the hub can be introduced more easily into the web and is locked after having passed through the constriction created by said extensions.

10. A cartridge as claimed in claim 8, wherein a leaf spring (25) having at least one can-like projection (27) extends from the bottom (4) of the cartridge housing (1) into the semi-circular space enclosed by the web (13), so that the cam-like projection engages that part of the inner peripheral surface of the hub (3) inside the cartridge housing, which is nearest to the cartridge rear wall (6), and thereby holds the hub firmly in the undercut web.

11. A cartridge as claimed in claim 8, wherein the web (13) consists of two parts (13a, 13b) of equal size, hingedly connected to one another, which are pivotally mounted on the cartridge bottom (4) and can be held, by spring means, in a closed position which locks the hub (3).

12. A cartridge as claimed in one or more of claims 1 to 11, wherein the lid (8) of the cartridge is provided with a circular protrusion (24) which bears against the hub (3).

13. A cartridge as claimed in any of claims 1 to 12, wherein at least one of the side walls (5, 5') of the cartridge is provided with a recess (20) which cooperates with snap means (34) on the apparatus-associated cartridge-receiving means (30) for the purpose of locking the cartridge in position in the said receiving means.

14. An apparatus for use with a cartridge as claimed in one or more of claims 1 to 13, wherein there are provided receiving means for the cartridge housing (1) and hub (3); means for releasing the locking means; and an actuating device (40 to 50) by means of which the hub-receiving member, together with the tape roll (2) fastened thereto, can be moved relative to the cartridge housing, and the peripheral surface of the tape roll (2) can brought into contact with a capstan.

15. An apparatus as claimed in claim 14, wherein the receiving means include a pivotally mounted frame (30) with lateral support members (31, 31') and positioning members (32) for the cartridge housing (1), and wherein there is provided a rotatable hub-receiving member (36) which, when the frame is depressed, is brought into engagement with the hub (3) carrying the tape roll (2), and which is mounted on a support (39) for movement towards and away from the capstan.

16. An apparatus as claimed in claim 15, wherein the support (39) of the hub-receiving member (36) is connected to an actuating device (40 to 50) which effects movement of the support (39) and which, after the hub (3) has engaged the hub-receiving member (36), removes the tape roll (2) at least partially from the cartridge and presses it against the capstan.

17. An apparatus as claimed in claim 16, wherein the actuating device consists of at least one actuating member (46) which can be displaced by a motor (M) via a conventional transmission mechanism (44, 45) and which engages the movable spring-loaded support (39) of the hub-receiving member (36).

18. An apparatus as claimed in claim 17, wherein the actuating device (40 to 50) includes a pivoting lever (41) which has a surface (50) of predetermined shape making contact with the actuating member (46) and determining the manner of movement of the pivoting lever, and which possesses at least one pin (40) engaging the cartridge housing (1) at a predetermined point.

19. An apparatus as claimed in claims 14 to 18, wherein the hub-receiving member (36) possesses a snap mechanism (38) for the releasable locking of the hub (3) which is provided with a recess (37) cooperating with said mechanism.

20. An apparatus as claimed in claims 14 to 19, wherein the range of pivotal movement of the pivoting lever (41) is so large that part of the cartridge housing can be moved, by means of the pin (40), under the wall (35') of the apparatus housing which adjoins the fully depressed frame (30) and lies in the plane of the frame, as a result of which the frame is held over the cartridge housing in the position in which it has been swung down into the apparatus.

## Revendications

1. Cassette de bande, en particulier cassette de bande magnétique, constituée d'un boîtier (1) comportant un fond (4), un couvercle (8) et des parois latérales (5, 5'), une paroi arrière (6) et une paroi avant (7) jointes au fond (4), d'un rouleau de bande (2) enroulé sur un noyau (3) et de supports comportant un dispositif de blocage pour le rouleau de bande (2), caractérisée par le fait que les deux parois latérales (5, 5') et la paroi arrière (6) sont jointes de façon permanente entre elles et au fond (4), la paroi avant (7) est jointe de façon non permanente au fond (4) et aux parois latérales (5, 5') et le couvercle (8) est joint par une articulation à la paroi arrière (6) et à la paroi avant (7) et est divisé en deux parties par une articulation de façon telle qu'il peut être rabattu avec la paroi avant (7) autour du bord inférieur de la paroi arrière (6), les surfaces venant en contact comportant des moyens de jonction correspondants séparables (11, 11' ; 9, 9' ; 12, 12'), et le support du rouleau de bande (2) dans le boîtier (1) de la cassette comportant un dispositif de blocage (13, 16) agissant axialement sur le noyau (3) également après l'ouverture du couvercle.

2. Cassette selon la revendication 1, caractérisée par le fait que les articulations sont constituées par des charnières film.

3. Cassette selon l'une des revendications 1 et 2, caractérisée par le fait que les moyens de jonction entre les surfaces en contact, quand la cassette est ouverte, sont des nervures latérales (11, 11') prévues sur le fond (4) entre lesquelles le couvercle (8) peut être coincé.

4. Cassette selon l'une des revendications 1 et 2, caractérisée par le fait que les moyens de jonction entre les surfaces en contact sont constitués par un revêtement adhésif appliqué sur au moins une de ces surfaces.

5. Cassette selon l'une des revendications 1 et 2, caractérisée par le fait que les moyens de jonction entre les surfaces en contact sont constitués, d'un côté, par des boutons et, de l'autre côté, par des creux correspondants qui forment des jonctions à serrage.

6. Cassette selon l'une des revendications 1 à 5, caractérisée par le fait que des jonctions, supprimables lors de l'ouverture de la cassette, sont formées entre la paroi avant (7) d'un côté et le fond (4) et les parois latérales (5, 5') de l'autre côté par des jonctions à serrage constituées de saillies (9, 9') et d'évidements (10, 10').

7. Cassette selon la revendication 6, caractérisée par le fait que les saillies (9, 9'), existant sur la paroi avant (7) pour les jonctions supprimables, sont prévues à la fois pour les jonctions entre la paroi avant d'un côté et le fond (4) et les parois latérales (5, 5') de l'autre côté et pour la jonction des surfaces en contact quand la cassette (1) est ouverte.

8. Cassette selon l'une des revendications 1 à 7, caractérisée par le fait qu'elle comporte, pour le rouleau de bande (2), un support formé d'une nervure en demi-cercle (13) prévue sur le fond (4) de la cassette, nervure qui présente une contredépouille et dans laquelle peut être introduit, pour y être retenu, le noyau (3) portant le rouleau de bande (2) et pourvu d'une gorge circulaire (14) adaptée à la contredépouille.

9. Cassette selon la revendication 8, caractérisée par le fait que la distance, correspondant au diamètre du demi-cercle entre les extrémités de la nervure, est légèrement réduite à ces extrémités par des appendices (15, 15') fléchissant élastiquement, et présentant des biais d'entrée, de sorte que le noyau peut être introduit plus facilement dans la nervure et, après que le rétrécissement formé par la distance réduite a été vaincu, est bloqué.

10. Cassette selon la revendication 8, caractérisée par le fait qu'un ressort-lame (25) présentant au moins une saillie (27), du genre mentonnet, part du fond (4) du boîtier (1) de la cassette et entre dans l'espace semi circulaire délimité par la nervure (13), de sorte que la saillie du genre mentonnet s'engage sur la partie voisine de la paroi arrière (6) de la cassette de la surface périphérique intérieure du noyau (3) se trouvant dans le boîtier de la cassette afin d'immobiliser ce noyau dans la nervure à contredépouille.

11. Cassette selon la revendication 8, caractérisée par le fait que la nervure (13) est formée de deux plaques (13a, 13b), de mêmes dimensions et réunies par une articulation, qui sont montées pivotantes sur le fond (4) de la cassette et peuvent être maintenues par des moyens élastiques dans une position de fermeture bloquant le noyau (3).

12. Cassette selon l'une des revendications 1 à 11, caractérisée par le fait que son couvercle (8) peut s'appuyer sur le noyau (3) par des profils circulaires (24).

13. Cassette selon l'une des revendications 1 à 12, caractérisée par le fait qu'au moins une de ses parois latérales (5, 5') est pourvue d'un creux (20) qui, pour l'arrêt de la cassette dans le porte-cassette (30) de l'appareil, coopère avec un mécanisme à ressort (34).

14. Appareil pour la cassette selon l'une des revendications 1 à 13, caractérisé par le fait qu'il comporte un logement destiné à recevoir le boîtier (1) de la cassette et le noyau (3), des moyens de déblocage et un dispositif de manœuvre (40 à 50) au moyen duquel le porte-noyau (36) avec le rouleau de bande (2) fixé dessus peut être déplacé par rapport au boîtier de la cassette et la surface périphérique du rouleau de bande (2) peut être amenée en contact avec un organe d'entraînement.

15. Appareil selon la revendication 14, caractérisé par le fait que le logement comprend un châssis basculant (30) pourvu d'ailes latérales d'appui (31, 31') et d'éléments (32) de positionnement du boîtier (1) de la cassette, et qu'il est prévu un porte-noyau tournant (36) venant en prise avec le noyau (3) du rouleau de bande (2) lors du basculement du châssis, lequel porte-noyau est monté sur un support (39) de façon à être mobile vers l'organe d'entraînement.

16. Appareil selon la revendication 15, caractérisé par le fait que le support (39) du porte-noyau (36) est lié à un dispositif de manœuvre (40 à 50) qui produit le mouvement de ce support (39) et, après que le noyau (3) est venu en prise avec le porte-noyau (36), sépare au moins en partie le rouleau de bande (2) de la cassette et le serre contre l'organe d'entraînement.

17. Appareil selon la revendication 16, caractérisé par le fait que le dispositif de manœuvre est constitué d'au moins un élément de manœuvre (46) mû par un moteur (M) par l'intermédiaire de mécanismes réducteurs (44, 45) et attaquant le support (39), mobile et soumis à l'action d'un ressort, du porte-noyau (36).

18. Appareil selon la revendication 17, caractérisé par le fait que le dispositif de manœuvre (40 à 50) comporte un levier pivotant (41) qui présente pour son pivotement un contour déterminé (50) touchant l'élément de manœuvre (46) et porte au moins une broche d'entraînement (40) s'engageant à un endroit déterminé dans le boîtier (1) de la cassette.

19. Appareil selon l'une des revendications 14 à 18, caractérisé par le fait que le porte-noyau (36) comporte un mécanisme à ressort (38) pour la fixation temporaire du noyau (3), pourvu de profils appropriés (37).

20. Appareil selon l'une des revendications 14 à 19, caractérisé par le fait que l'amplitude de pivotement du levier pivotant (41) est telle que la broche d'entraînement (40) puisse déplacer le boîtier de la cassette en partie jusque sous une paroi de boîtier (35') de l'appareil contiguë au châssis (30) rabattu et situé dans le plan de celui-ci, grâce à quoi celui-ci peut, par l'intermédiaire du boîtier de la cassette, être maintenu en position rabattue dans l'appareil.

# FIG. 1

FIG. 1a

## FIG. 2

## FIG. 3

# FIG. 4

# FIG. 4a

# FIG. 5

0 017 134

FIG. 6